(19) Europäisches Patentamt
European Patent Office
Office européen des brevets

(11) Veröffentlichungsnummer: **0 102 482**
**B1**

(12) # EUROPÄISCHE PATENTSCHRIFT

(45) Veröffentlichungstag der Patentschrift: **18.03.87**

(51) Int. Cl.⁴: **C 08 G 18/02,** C 08 G 18/79, C 08 G 18/18

(21) Anmeldenummer: **83106785.5**

(22) Anmeldetag: **11.07.83**

(54) **Verfahren zur Herstellung von Isocyanuratgruppen aufweisenden Polyisocyanaten und ihre Verwendung als Isocyanatkomponente zur Herstellung von Polyurethanen.**

(30) Priorität: **23.07.82 DE 3227489**

(43) Veröffentlichungstag der Anmeldung: **14.03.84 Patentblatt 84/11**

(45) Bekanntmachung des Hinweises auf die Patenterteilung: **18.03.87 Patentblatt 87/12**

(84) Benannte Vertragsstaaten: **BE DE FR GB IT**

(56) Entgegenhaltungen:
**EP-A-0 007 050**
**DE-A-1 667 309**
**DE-A-2 559 255**
**DE-A-2 752 419**
**FR-A-2 342 309**
**US-A-3 980 594**
**US-A-4 092 276**

(73) Patentinhaber: **BAYER AG, Konzernverwaltung RP Patentabteilung, D-5090 Leverkusen 1 Bayerwerk (DE)**

(72) Erfinder: **Kerimis, Dimitrios, Dr., Pulheimer Strasse 15, D-5000 Koeln 71 (DE)**
Erfinder: **Müller, Hanns Peter, Dr., Im Kerberich 6, D-5068 Odenthal (DE)**
Erfinder: **Wagner, Kuno, Dr., Am Kiesberg 8, D-5090 Leverkusen 1 (DE)**

**EP 0 102 482 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die vorliegende Erfindung betrifft ein neues Verfahren zur Herstellung von Isocyanuratgruppen aufweisenden Polyisocyanaten durch katalytische Trimerisierung von monomeren Polyisocyanaten unter Verwendung von neuartigen Trimerisierungskatalysatoren, sowie die Verwendung der erfindungsgemäßen Verfahrensprodukte als Isocyanatkomponente bei der Herstellung von Polyurethanen nach dem Isocyanat-Polyadditionsverfahren.

Katalysatoren zur Trimerisierung organischer Isocyanate, insbesondere Polyisocyanate sind in großer Zahl bekannt (J.H. Saunders und K.C. Frisch, Polyurethanes Chemistry and Technology, S. 94 ff (1962)). Als Katalysatoren für die Trimerisierung sind starke organische Basen geeignet, so z.B. die alkalisch wirkenden Metallsalze von Carbonsäuren, Metallalkoholate, Metallphenolate, Alkalimetallcarbonate, tert. Amine, tert. Phosphine und die "Onium"-Verbindungen von Stickstoff und Phosphor sowie basische Heterocyclen dieser Elemente. Die Katalysatoren werden dabei häufig in Kombination eingesetzt oder zusammen mit weiteren Co-Katalysatoren wie Mono-N-substituierten Carbonaminsäureestern (A. Farkas und G.A. Mills, Advances in Catalysis, Vol. 13, 393 (1962)).

Bei den neueren Verfahren des Standes der Technik verwendet man spezielle organische Basen als Trimerisierungskatalysatoren, die in teilweise aufwendigen Syntheseverfahren hergestellt werden müssen.

So nimmt man z.B. zur Trimerisierung von aromatischen polyisocyanaten Mannich-Basen (DE-OS 2 551 634 und DE-OS 2 641 380) oder tert. Phosphine, wobei im Falle der Phosphine zuerst Uretdione gebildet werden, die sich erst in zweiter Reaktionsphase zum Isocyanurat umsetzen (DE-OS 1 201 992). Zur Trimerisierung (cyclo)-aliphatischer Diisocyanate verwendet man neuerdings häufig organische Basen mit Betain-Struktur wie quartäre Ammoniumhydroxide (EP-A 010 589 und EP-A 009 694), Aminimide (J.E. Kresta, R.J. Chang, S. Kathiriya und K.C. Frisch, Makromol. Chem. 180, 1081 (1979)) sowie Aziridinderivate in Kombination mit tert. Aminen (DE-AS 2 325 826).

Überraschenderweise wurden nun völlig neuartige Trimerisierungskatalysatoren gefunden, die sich durch das gleichzeitige Vorliegen einer Reihe bemerkenswerter Vorteile auszeichnen:

1. Die neuen Katalysatoren eignen sich sowohl zur Trimerisierung von aromatischen als auch von aliphatischen Polyisocyanaten.

2. Die neuen Katalysatoren und auch ihre Umsetzungsprodukte mit den nachstehend näher beschriebenen Katalysatorgiften sind meist in den Ausgangs- und Endprodukten des nachstehend näher beschriebenen erfindungsgemäßen Verfahrens löslich, so daß sich aufwendige Trennungsoperationen erübrigen.

3. Die Trimerisierungsreaktion unter Verwendung der neuen Katalysatoren kann sowohl Lösungsmittel-frei als auch in Gegenwart von Lösungsmitteln bei vergleichsweise niedrigen Temperaturen durchgeführt werden, so daß als Verfahrensprodukte, weitgehend farblose, klare, Isocyanuratgruppen aufweisende Polyisocyanate entstehen.

4. Die schwach exotherme Trimerisierungsreaktion ist sowohl bei kontinuierlicher als auch diskontinuierlicher Fahrweise sicherheits- und verfahrenstechnisch leicht zu beherrschen.

5. Es werden im allgemeinen nur geringe Mengen der Katalysatoren und demzufolge auch nur geringe Mengen an Katalysatorgiften benötigt und dennoch kurze Reaktionszeiten ermöglicht

6. Die Katalysatoren sind leicht und billig herstellbar und nahezu geruchlos.

Gegenstand der Erfindung ist ein Verfahren zur Herstellung von Isocyanuratgruppen aufweisenden Polyisocyanaten durch Trimerisierung eines Teils der Isocyanatgruppen von organischen Polyisocyanaten und Abbruch der Trimerisierungsreaktion durch Zugabe eines Katalysatorengifts, das dadurch gekennzeichnet ist, daß man als Trimerisierungskatalysatoren quartäre Ammoniumsalze verwendet, welche Umsetzungsprodukte von

(i) tertiären Aminen mit ausschließlich aliphatisch bzw. cycloaliphatisch gebundenen Aminogruppen, die auch Teil eines nicht-aromatischen, heterocyclischen Ringsystems sein können,

mit

(ii) Phosphonsäureestern der Formel

$$R-\overset{O}{\overset{\|}{P}}(OR')_2$$

in welcher

R für einen, gegebenenfalls inerte Substituenten aufweisenden Phenylrest oder einen Alkylrest mit 1 bis 4 Kohlenstoffatomen steht und

R' einen Alkylrest mit 1 bis 4 Kohlenstoffatomen bedeutet, darstellen.

Gegenstand der Erfindung ist auch die Verwendung der nach diesem Verfahren erhältlichen, Isocyanuratgruppen aufweisenden Polyisocyanate, gegebenenfalls in von überschüssigen Ausgangspolyisocyanaten befreiter Form und/ oder gegebenenfalls im mit Blockierungsmittel für Isocyanatgruppen blockierter Form als Isocyanatkomponente zur Herstellung von Polyurethanen nach dem Isocyanat-Polyadditionsverfahren.

Bei den neuen erfindungswesentlichen Trimerisierungskatalysatoren handelt es sich um quartäre, d.h. keine NH-Bindungen aufweisende Ammoniumsalze, die Umsetzungsprodukte von (i) tartiären Aminen mit (ii)alkylierend wirkenden Estern von Säuren des Phosphors darstellen.

Bei der Katalysatorkomponente (i) handelt es sich um beliebige tertiäre Amine, mit ausschließlich aliphatisch

bzw. cykloaliphatisch gebundenen Aminogruppen, die auch Teil eines nicht-aromatischen, heterocyklischen Ringsystems sein können. Die besonders gut geeigneten derartigen Amine weisen im allgemeinen ein zwischen 59 und 250 liegendes Molekulargewicht auf. Typische Beispiele derartiger Amine sind Trimethylamin, Triethylamin, Tributylamine, Triethylendiamin, Hexamethylentetramin, N-Methyl-morpholin, 1,5-Diazabicyclo[3.4.0]-nonen-5 oder 1,8-Diazabicyclo[5.4.0]undec-7-en.

Bei der Katalysatorkomponente (ii) handelt es sich um neutrale, alkylierend wirkende Ester von aromatischen oder aliphatischen Phophonsäuren der bereits oben genannten Art. Typische Beispiele geeigneter Katalysatorkomponenten (ii) sind Benzolphosphonsäure-dimethylester, p-Toluolphosphonsäurediethylester, Methanphosphonsäuredimethylester, n-Butanphosphonsäurediethylester, Ethanphosphonsäurediethylester oder Ethanphosponsäuredimethylester.

Bei der Herstellung der erfindungswesentlichen Katalysatoren werden die Einzelkomponenten (i) und (ii) in solchen Mengen miteinander umgesetzt, daß auf jedes Grammäquivalent an tertiärem Stickstoff der Komponente (i) mindestens ein Mol der Komponente (ii) entfällt. Im allgemeinen wird ein beliebig hoher Überschuß der Komponente (ii) eingesetzt, der vorzugsweise nach Beendigung der Alkylierungsreaktion, beispielsweise durch Destillation, entfernt wird. Die Umsetzung der Einzelkomponenten (i) und (ii) erfolgt vorzugsweise in Substanz innerhalb des Temperaturbereichs von 50-200°C, vorzugsweise 80-180°C während eines Zeitraums von ca. 0,5 bis 10 Stunden. Im allgemeinen erfolgt die Umsetzung dergestalt, daß man die Reaktionspartner am Rückfluß kocht. Oft ist es vorteilhaft, die Umsetzung unter Inertgasatmosphäre und/ oder unter Druck durchzuführen. Die Reaktionsdauer und -temperatur richtet sich selbstverständlich in erster Linie nach der Reaktivität der jeweils zum Einsatz gelangenden Einzelkomponenten (i) und (ii).

Für die Trimerisierungsreaktion werden die erfindungswesentlichen Katalysatoren in Substanz oder als 0,005- bis 95-, vorzugsweise 0,01- bis 70-gew.-%ige Lösungen eingesetzt.

Beispiele geeigneter Lösungsmittel sind Methanol, Ethanol, Propanol, Ethylenglykol, Propandiol-(1,2), Propandiol-(1,3), Butylenglykol, Glycerin oder Oligoethylen- bzw. -propylenglykole (Oligomerisierungsgrad 2 bis 6) (die Alkohole sollen einerseits die Ammoniumverbindungen gut lösen, andererseits aber mit dem Isocyanat noch einigermaßen mischbar sein und eine niedrige Viskosität besitzen).

Außerdem können auch aprotische, gegenüber Isocyanaten unreaktive Lösungsmittel eingesetzt werden, deren $E_T$-Wert (Cr. Reichardt, Lösungsmittel-Effekte in der organischen Chemie, Chem. Taschenbücher Bd. 4, Verlag Chemie 196) vorzugsweise im Bereich 33,5 bis 47 liegt. Außer Nitrilen, wie Acetonitril, Propionitril oder Benzonitril, Nitroverbindungen, wie Nitromethan oder Nitrobenzol, Kohlensäureestern, wie z.B. Ethylen-oder Propylencarbonat, oder Ketonen, wie Aceton, Acetophenon, Butyl-methyl-keton oder Isobutylmethyl-keton können selbst so unpolare Lösungsmittel wie Chlorkohlenwasserstoffe, z.B. Methylenchlorid, Chloroform, 1,1,1-Trichlorethan oder Trichlorethylen oder aromatische Kohlenwasserstoffe, wie Benzol, Toluol oder Xylol oder Ester, wie Essigsäureethylester, Essigsäurebutylester oder Ethylenglykolmonomethyletheracetat eingesetzt werden.

Stark polare Lösungsmittel wie Dimethylformamid, N-Methylpyrrolidon, Tetramethylharnstoff oder Dimethylsulfoxid können zwar prinzipiell auch verwendet werden, ihr Einsatz ist jedoch nicht zu empfehlen, da sie einerseits nur schwierig von Nebenprodukten wie z.B. Aminen zu reinigen sind und andererseits im allgemeinen unerwünschte Nebenreaktionen von NCO-Gruppen katalysieren, so daß die erfindungsgemäßen Verfahrensprodukte bei Anwesenheit derartiger Lösungsmittel nicht lagerstabil sein würden.

Bei Verwendung von Hydroxylgruppen aufweisenden Lösungsmitteln entstehen beim erfindungsgemäßen Verfahren durch Reaktion mit einem Teil der Isocyanatgruppen des Ausgangspolyisocyanats Urethangruppen, was oftmals erwünscht ist, da derartige Urethangruppen einen cokatalytischen Effekt aufweisen. Die Menge an derartigen Lösungsmitteln, sofern es sich um einwertige Alkohole handelt, sollte jedoch so begrenzt werden, daß im Reaktionsgemisch maximal 2 Mol-%, bezogen auf die Isocyanatgruppen des Ausgangspolyisocyanats, an Hydroxylgruppen vorliegen. Oft ist es auch zweckmäßig, als Hydroxylgruppen aufweisende Lösungsmittel für die erfindungswesentlichen Katalysatoren mehrwertige Alkohole wie z.B. Ethylenglykol oder Glycerin einzusetzen, um die NCO-Funktionalität der erfindungsgemäßen Verfahrensprodukte nicht durch Urethanbildung zu reduzieren. Die Menge derartiger mehrwertiger Alkohole muß selbstverständlich jedoch so begrenzt werden, daß keine in den Verfahrensprodukten schwerlöslichen Polyurethane entstehen. Für die Trimerisierungsreaktion werden die erfindungswesentlichen Katalysatoren im allgemeinen in Mengen von 0,005 bis 1,5, vorzugsweise 0,01 bis 0,5 Mol-%, bezogen auf zu trimerisierendes Ausgangspolyisocyanat einerseits und aus den Einzelkomponenten (i) und (ii) gebildeten Ammoniumsalzen ohne Einbeziehung von gegebenenfalls noch vorliegendem überschüssigem, alkylierend wirkendem Ester andererseits, eingesetzt. Falls aromatische Polyisocyanate ohne Mitverwendung von Lösungsmitteln trimerisiert werden, liegt die Menge der erfindungswesentlichen Katalysatoren vorzugsweise innerhalb des Bereichs von 0,01 bis 0,02 Mol-%, bei Verdünnung des aromatischen Ausgangspolyisocyanats mit einem geeigneten, aprotischen Lösungsmittel liegt die Menge des Katalysators im allgemeinen zwischen 0,01 und 0,1 Mol-%.

Bei Verwendung von Ausgangspolyisocyanaten mit ausschließlich aliphatisch gebundenen Isocyanatgruppen liegt die Menge des Katalysators im allgemeinen im Bereich von 0,01 bis 0,1 Mol-%, während bei Verwendung von Ausgangspolyisocyanaten mit cycloaliphatisch gebundenen Isocyanatgruppen vorzugsweise 0,03 bis 0,5 Mol-% des Katalysators eingesetzt werden, wobei sich alle Prozentangaben, wie oben dargelegt, auf das Ausgangspolyisocyanat einerseits und das Ammoniumsalz andererseits beziehen.

Für die Trimerisierungsreaktion können beliebige organische Polyisocyanate als Ausgangsmaterialien

eingesetzt werden. Die neuen erfindungswesentlichen Katalysatoren eignen sich insbesondere zur teilweisen Trimerisierung der Isocyanatgruppen von Diisocyanaten mit aromatisch, aliphatisch oder cycloaliphatisch gebundenen Isocyanatgruppen des Molekulargewichtsbereichs 140-300, wie z.B. Tetramethylendiisocyanat, Hexamethylendiisocyanat, 1-Isocyanato-3,3,5-trimethyl-5-isocyanatomethyl-cyclohexan (Isophorondiisocyanat, abgekürzt: IPDI), 2,4- und/oder 2,6-Diisocyanatotoluol, 2,4'- und/oder 4,4'-Diisocyanatodiphenylmethan, 2,4'-Diisocyanatodicyclohexylmethan, 1-Methyl-2,4-diiso-cyanato-cyclohexan, Lysinesterdiisocyanaten, p-Xylylendiisocyanat oder beliebige Gemische derartiger Diisocyanate. Besonders gut geeignet sind auch Gemische der beispielhaft genannten aromatischen Diisocyanate mit beispielhaft genannten aliphatischen Diisocyanaten im Gewichtsverhältnis 1:3 bis 3:1. Auch höherfunktionelle Polyisocyanate wie beispielsweise Polyisocyanatgemische, die durch Phosgenierung von Anilin/Formaldehyd-Kondensaten entstehen, können beim erfindungsgemäßen Verfahren als Ausgangspolyisocyanat eingesetzt werden. Grundsätzlich, jedoch weniger bevorzugt, ist es auch möglich, NCO-Präpolymere, d.h. Umsetzungsprodukte von überschüssigen Mengen der beispielhaft genannten Diisocyanate mit mindestens difunktionellen Verbindungen mit gegenüber Isocyanatgruppen reaktionsfähigen Gruppen als Ausgangspolyisocyanate beim erfindungsgemäßen Verfahren einzusetzen. Grundsätzlich können beim erfindungsgemäßen Verfahren auch Gemische aus Diisocyanaten und Monoisocyanaten als Ausgangsmaterialien eingesetzt werden, um so zu interessanten Isocyanuratgruppen aufweisenden Polyisocyanaten mit einer gezielt erniedrigten NCO-Funktionalität zu gelangen. Hierbei werden die Di- und Monoisocyanate im allgemeinen in einem Molverhältnis Diisocyanat: Monoisocyanat von 1,5:1 bis 2,5:1 eingesetzt. Geeignete Monoisocyanate sind beispielsweise aliphatische Monoisocyanate mit 1 bis 18, vorzugsweise 4 bis 8 Kohlenstoffatomen wie Methylisocyanat, n-Butylisocyanat, n-Octylisocyanat oder Stearylisocyanat oder aromatische Monoisocyanate wie insbesondere Phenylisocyanat. Bevorzugte Ausgangspolyisocyanate für das erfindungsgemäße Verfahren sind 2,4- und/oder 2,6-Diisocyanatotoluol, Hexamethylendiisocyanat und IPDI.

Die Trimerisierungsreaktion kann in Abwesenheit oder in Gegenwart von gegenüber Isocyanatgruppen inerten Lösungsmitteln durchgeführt werden. Als Lösungsmittel für das erfindungsgemäße Verfahren eignen sich beliebige, gegenüber Isocyanatgruppen inerte Lösungsmittel bzw. Lösungsmittelgemische, deren Siedepunkt im weiten Bereich von ca. 50°C/1013 mbar bis 250°C/ 13,3 mbar liegt. Je nach Anwendungsbereich der erfindungsgemäßen Verfahrensprodukte können niedrig- bis mittelsiedende Lösungsmittel oder hochsiedende angewandt werden. Bevorzugt einzusetzende Lösungsmittel sind beispielsweise Ester wie Ethylacetat, Butylacetat, Ethylenglykol-monomethylether-acetat, Ethylenglykol-monoethylether-acetat oder Ketone wie z.B. Aceton, Methylethylketon, Methylisobutylketon, Cyclohexanon oder Methoxyhexanon. Auch Phthalsäureester wie z.B. Dibutylphthalat, Butylbenzylphthalat oder Phosphorsäureester wie Trikresylphosphat oder auch Alkylsulfonsäureester des Phenols und des Kresols sind geeignet. In Verdünnungsmitteln wie z.B. Toluol, Xylol oder höheren Aromaten besteht oft nur eine begrenzte Löslichkeit, so daß höhere Zusätze solcher Verdünnungsmittel zu Trübungen und Ausfällungen in den Reaktionsprodukten führen können.

Das bei der Durchführung der Trimerisierungsreaktion eingesetzte Lösungsmittel bzw. die eingesetzte Lösungsmittelmenge braucht nicht mit dem Lösungsmittel bzw. der Lösungsmittelmenge identisch zu sein, die in den erfindungsgemäßen Verfahrensprodukten bei ihrer erfindungsgemäßen Verwendung vorliegen. So kann man nach Beendigung des erfindungsgemäßen Verfahrens das eingesetzte Lösungsmittel bzw. Lösungsmittelgemisch selbstverständlich ganz oder teilweise destillativ entfernen und ganz oder teilweise durch ein anderes Lösungsmittel ersetzen. Lösungsmittelfrei hergestellte produkte können selbstverständlich nachträglich in den obengenannten Lösungsmitteln gelöst werden.

Die Trimerisierungsreaktion wird im allgemeinen im Temperaturbereich von 0 bis 200°C, vorzugsweise zwischen 10 und 100°C und besonders bevorzugt zwischen 25 und 80°C durchgeführt. Bei der Durchführung des erfindungsgemäßen Verfahrens in Gegenwart eines Lösungsmittels setzt man im allgemeinen das zu trimerisierende Ausgangspolyisocyanat und das betreffende Lösungsmittel in einem Gewichtsverhältnis von 1:4 bis 4:1, vorzugsweise 1:2 bis 2:1, besonders bevorzugt 0,8:1,2 bis 1,2:0,8 entsprechenden Mengen ein.

Die zu wählende Katalysatormenge richtet sich, wie oben ausgeführt, nach der Art des Ausgangspolyisocyanats und selbstverständlich auch nach der Reaktionstemperatur, bei welcher die Trimerisierung durchgeführt werden soll. Sie kann in einem einfachen orientierenden Vorversuch zuverlässig ermittelt werden. Im allgemeinen ist die Katalysatorenkonzentration gegenüber dem lösungsmittelfreien Verfahren bei Verwendung von Lösungsmitteln um den Faktor 5 bis 15 zu erhöhen.

Die Trimerisierungsreaktion kann beispielsweise nach folgenden Varianten durchgeführt werden:

1. Der Katalysator bzw. seine Lösung in einem der hierfür geeigneten Lösungsmittel wird dem zu trimerisierenden Polyisocyanat ohne Mitverwendung eines Hilfslösungsmittels für die Trimerisierungsreaktion bei Raumtemperatur zudosiert, worauf im allgemeinen die schwach exotherme Trimerisierungsreaktion spontan anspringt. Die Reaktionstemperatur wird anschließend gegebenenfalls durch äußeres Kühlen bzw. Heizen auf der gewünschten Reaktionstemperatur gehalten, bis die Trimerisierungsreaktion durch Zugabe eines Katalysatorengiftes abgebrochen wird.

2. Das zu trimerisierende Polyisocyanat wird in einem Lösungsmittel der oben beispielhaft genannten Art vorgelegt; anschließend wird diese Lösung mit dem Trimerisierungskatalysator bzw. seiner Lösung versetzt. Auch bei dieser Variante des erfindungsgemäßen Verfahrens wird die Temperatur des Reaktionsgemischs gegebenenfalls durch äußeres Kühlen bzw. Heizen innerhalb der genannten Bereiche eingestellt. Auch hier erfolgt der Abbruch der Trimerisierungsreaktion beim Erreichen des erwünschten Trimerisierungsgrades durch Zugabe eines Katalysatorengiftes.

Bei allen beispielhaft genannten Varianten wird die Trimerisierungsreaktion im allgemeinen bei Erreichen eines Trimerisierungsgrads (Trimerisierungsgrad = Prozentsatz der trimerisierten Isocyanatgruppen, bezogen auf Gesamtmenge der im Ausgangspolyisocyanat vorliegenden Isocyanatgruppen) von 10 bis 70 % abgebrochen. Bei der lösungsmittelfreien Durchführung des erfindungsgemäßen Verfahrens unter anschließender Entfernung von überschüssigem Ausgangspolyisocyanat, beispielsweise im Dünnschichtverdampfer, liegt der Trimerisierungsgrad im allgemeinen zwischen 10 und 40 %. Bei der Durchführung des erfindungsgemäßen Verfahrens in Gegenwart von Lösungsmitteln ohne anschließende Entfernung von nicht-umgesetztem Ausgangspolyisocyanat liegt der Trimerisierungsgrad im allgemeinen zwischen 50 und 70 %.

Geeignete Katalysatorengifte sind beispielsweise beliebige Säurehalogenide, insbesondere Säurechloride, wie z.B. Acetylchlorid, Benzoylchlorid, Terephthaloyldiol, Phthaloyldichlorid, Trichloracetylchlorid, Phosphortrichlorid oder Phosphortribromid oder auch, jedoch weniger bevorzugt, starke, den Katalysator neutralisierende und damit desaktivierende Säuren wie z.B. Schwefelsäure, Phosphorsäure, Chlorwasserstoff, Toluolsulfonsäure, Methansulfonsäure, Chlorsulfonsäure oder Nona-fluorbutansulfonsäure. Zur Desaktivierung des Katalysators ist es ausreichend, wenn dem Reaktionsgemisch 100 bis 110 Äquivalentprozent, d.h. im Falle von monofunktionellen Katalysatorengiften 100 bis 110 Mol-%, bezogen auf die im Katalysator vorliegenden quartären Ammoniumgruppen, des Katalysatorgiftes zugesetzt werden.

Die erfindungsgemäßen Verfahrensprodukte können insbesondere im Falle der lösungsmittelfreien Durchführung der Trimerisierungsreaktion in an sich bekannter Weise, beispielsweise durch Dünnschichtdestillation von überschüssigem, nicht-umgesetztem Ausgangspolyisocyanat befreit werden, so daß Isocyanuratgruppen aufweisende Polyisocyanate mit einem Gehalt an monomeren Ausgangsdiisocyanaten unter 3 Gew.-%, vorzugsweise unter 0,7 Gew.-%, erhältlich sind.

Die erfindungsgemäßen Verfahrensprodukte können selbstverständlich in an sich bekannter Weise mit geeigneten Blockierungsmitteln für Isocyanatgruppen wie z.B. Phenol, ε-Caprolactam, Malonsäurediethylester oder Acetessigsäureethylester blockiert werden.

Die erfindungsgemäßen Verfahrensprodukte bzw. ihre durch die genannte Blockierungsreaktion erhaltenen Derivate stellen wertvolle Ausgangsmaterialien zur Herstellung von Polyurethankunststoffen nach dem Isocyanat-Polyadditionsverfahren dar. Sie eignen sich insbesondere als Isocyanatkomponente in Zweikomponentenpolyurethanlacken.

Die Durchführbarkeit des erfindungsgemäßen Verfahrens unter Verwendung der erfindungswesentlichen Katalysatoren ist überraschend, da nicht erwartet werden konnte, daß die erfindungswesentlichen, Phosphor aufweisenden Katalysatoren brauchbare Trimerisierungskatalysatoren darstellen. Es war nämlich bekannt, daß Phosphorverbindungen, insbesondere solche, die P=0-Gruppierungen aufweisen (z.B. Phospholinoxide) wirksame Carbodiimidisierungskatalysatoren darstellen. Überraschenderweise werden bei der Durchführung des erfindungsgemäßen Verfahrens jedoch keine derartige Nebenreaktionen (Carbodiimidbildung) beobachtet. Auch die Möglichkeit, die erfindungsgemäße Reaktion durch Zugabe von Säurechloriden abzustoppen konnte nicht vorhergesehen werden, da eigentlich erwartet werden mußte, daß quartäre Ammoniumsalze der Art der erfindungswesentlichen Katalysatoren gegenüber Säurechloriden weitgehend inert sind.

In den nachfolgenden Beispielen beziehen sich alle Prozentangaben, soweit nicht anders lautend ausgeführt, auf Gewichtsprozente.

**Beispiel 1**

Herstellung einer erfindungsgemäß einzusetzenden Ammoniumverbindung

101 Gew.-Teile Triethylamin und 248 Gew.-Teile Methanphosphonsäuredimethylester werden vermischt und unter Rühren 8 Stunden leicht am Rückfluß gekocht. Anschließend wird der überschüssige Methanphosphonsäureester im Vakuum abdestilliert.

Man erhält 140 Gew.-Teile einer gelben viskosen Flüssigkeit.

**Beispiel 2**

Herstellung einer erfindungsgemäß einzusetzenden Ammoniumverbindung

112 Gew.-Teile Triethylendiamin (Dabco) und 1240 Gew.-Teile Methanphosphonsäuredimethylester werden unter leichter Stickstoff-Durchleitung 8 Stunden bei 100°C gerührt. Anschließend werden im Vakuum ca. 400 Gew.-Teile des überschüssigen Methanphosphonsäureesters abdestilliert, das ausgefallene Produkt abfiltriert und im Vakuum getrocknet. Man erhält 355 Gew.-Teile einer farblosen kristallinen Verbindung.

**Beispiel 3**

Herstellung einer erfindungsgemäß einzusetzenden Ammoniumverbindung

50,5 Gew.-Teile N-Methylmorpholin und 124 Gew.-Teile Methanphosphonsäuredimethylester werden 8 Stunden unter Stickstoff-Durchleitung bei 100°C gerührt. Anschließend wird der überschüssige Methanphosphonsäureester im Vakuum abdestilliert.

Man erhält 110 Gew.-Teile einer gelb-braunen viskosen Flüssigkeit, die beim Abkühlen erstarrt.

**Beispiel 4**

100 Gew.-Teile 2,4-Toluylendiisocyanat werden in 100 Gew.-Teile wasserfreiem Butylacetat gelöst und bei Zimmertemperatur mit 0,25 Gew.-Teilen einer 10 gew.-%igen Lösung des in Beispiel 1 beschriebenen Katalysators in Ethanol versetzt. Das Reaktionsgemisch wird 2 Stunden bei 45-50°C (Bad-Temperatur) und anschließend 20 Stunden bei Zimmertemperatur gerührt.

Schließlich wird die Trimerisierungsreaktion mit 0,523 Gew.-Teilen einer 3 gew.-%igen Lösung von Benzoylchlorid in wasserfreiem Butylacetat gestoppt und das Reaktionsgemisch 1 Stunde bei 60°C nachgerührt.

Man erhält eine klare, farblose Lösung. Die Spezifikationen der Lösung sind: NCO-Gehalt: 7,7 Gew.-%; freies 2,4-Toluylendiisocyanat: 0,22 Gew.-%; Viskosität $\eta$ bei 20°C: 3500 mPas.

**Beispiel 5**

1000 Gew.-Teile Hexamethylendiisocyanat (HDI) werden bei 40°C vorgelegt und innerhalb 1 Stunde mit 20 Gew.-Teilen einer 3 gew.-%igen Lösung des in Beispiel 1 beschriebenen Katalysators in Ethylhexanol versetzt. Nach Beendigung des Zutropfens sorgt man durch Heizen und/ oder Kühlen, daß sich im Reaktionsgefäß eine Temperatur von ca. 60°C einstellt. Nach ca. 3,5 Stunden wird bei einem NCO-Gehalt von 39-40 Gew.-% die Trimerisierungsreaktion durch Zugabe von 12,5 Gewichtsteilen einer 3 gew.-%igen Lösung von Benzoylchlorid in Hexamethylendiisocyanat gestoppt und 1 Stunde bei 60°C nachgerührt. Nach eventueller Filtration und Dünnschichtdestillation erhält man ein Sumpfprodukt, das klar und nahezu farblos ist und folgende Spezifikationen hat: NCO-Gehalt: 23,2 %; Gehalt an monomerem HDI: 0,3 %; Viskosität $\eta$ bei 20°C: 3500 mpas.

**Beispiel 6**

250 Gewichtsteile Toluylen-2,4- und -2,6-diisocyanat (Gemisch 65:35) werden mit 0,25 Gewichtsteile einer 10 gew.-%igen Lösung des in Beispiel 2 beschriebenen Katalysators in Ethanol versetzt und bei 60°C (Badtemperatur gerührt. Nach 1 Stunde ist die Innentemperatur auf 80-85°C angestiegen und der NCO-Gehalt auf 35 % gesunken.

**Beispiel 7**

250 Gewichtsteile Isophorondiisocyanat (IPDI) werden mit 10 Gewichtsteilen einer 10 %igen Lösung des in Beispiel 3 beschriebenen Katalysators in Ethanol versetzt und bei 80°C (Badtemperatur) gerührt. Nach 12 Stunden ist bei konstanter Innentemperatur der NCO-Gehalt auf 30 % gesunken.

**Patentansprüche**

1. Verfahren zur Herstellung von Isocyanuratgruppen aufweisenden Polyisocyanaten durch Trimerisierung eines Teils der Isocyanatgruppen von organischen Polyisocyanaten und Abbruch der Trimerisierungsreaktion durch Zugabe eines Katalysatorengifts, dadurch gekennzeichnet, daß man als Trimerisierungskatalysatoren quartäre Ammoniumsalze verwendet, welche Umsetzungsprodukte von

(i) tertiären Aminen mit ausschließlich aliphatisch bzw. cycloaliphatisch gebundenen Aminogruppen, die auch Teil eines nicht-aromatischen, heterocyclischen Ringsystems sein können,

mit

(ii) Phosphonsäureestern der Formel

$$R-\overset{O}{\overset{\|}{P}}(OR')_2$$

in welcher

R für einen, gegebenenfalls inerte Substituenten aufweisenden Phenylrest oder einen Alkylrest mit 1 bis 4 Kohlenstoffatomen steht und

R' einen Alkylrest mit 1 bis 4 Kohlenstoffatomen bedeutet,

darstellen.

2. Verfahren gemäß Anspruch 1, dadurch gekennzeichnet, daß man als Katalysatorengifte organische Säurechloride verwendet.

3. Verfahren gemäß Anspruch 1 bis 2 dadurch gekennzeichnet, daß man die Umsetzung im Temperaturbereich von 10 bis 100°C unter Verwendung einer Katalysatormenge von 0,005 bis 1,5 Mol-%, bezogen auf die Menge des teilweise zu trimerisierenden Polyisocyanats, durchführt.

4. Verwendung der gemäß Anspruch 1 bis 3 erhältlichen, Isocyanuratgruppen aufweisenden Polyisocyanate, gegebenenfalls in von überschüssigen Ausgangspolyisocyanaten befreiter Form und/oder gegebenenfalls in mit Blockierungsmitteln für Isocyanatgruppen blockierter Form als Isocyanatkomponente zur Herstellung von Polyurethanen nach dem Isocyanat-Polyadditionsverfahren.

**Claims**

1. Process for the preparation of polyisocyanates containing isocyanurate groups by trimerising a portion of the isocyanate groups of organic polyisocyanates and stopping the trimerisation reaction by the addition of a catalyst poison, characterised in that the trimerisation catalysts used are quaternary ammonium salts which are reaction products of

(i) tertiary amines having exclusively aliphatically or cycloaliphatically bound amino groups which may also form part of a non-aromatic heterocyclic ring system and

(ii) phosphonic acid esters of the formula

$$R-\overset{O}{\overset{\|}{P}}(OR')_2$$

in which

R represents a phenyl group optionally containing inert substituents or an alkyl group having 1 to 4 carbon atoms and

R' denotes an alkyl group having 1 to 4 carbon atoms.

2. Process according to Claim 1, characterised in that the catalyst poisons used are organic acid chlorides.

3. Process according to Claim 1 to 2,characterised in that the reaction is carried out in the temperature range of 10 to 100°C, using a quantity of catalyst of 0,005 to 1.5 mol %, based on the quantity of the polyisocyanate which is to be partially trimerised.

4. Use of the polyisocyanatee containing isocyanurate groups obtainable according to Claim 1 to 3, optionally in a form freed from excess starting polyisocyanates and/or optionally in a form blocked with blocking agents for isocyanate groups, as isocyanate component for the preparation of polyurethanes by the isocyanate polyaddition process.

**Revendications**

1. Procédé de production de polyisocyanates porteurs de groupes isocyanurate par trimérisation d'une partie des groupes isocyanate de polyisocyanates organiques et arrêt de la réaction de trimérisation par l'addition d'un poison du catalyseur, caractérisé en ce qu'on utilise comme catalyseurs de trimérisation des sels d'ammonium quaternaire qui représentent des produits de réaction

(i) d'amines tertiaires à groupes amino en liaison exclusivement aliphatique ou cycloaliphatique qui peuvent aussi faire partie d'un système de noyau hétérocyclique non aromatique,

avec

(ii) des esters d'acide phosphonique de formule

$$R-\overset{O}{\overset{\|}{P}}(OR')_2$$

dans laquelle

R est un reste phényle portant éventuellement des substituants inertes ou un reste alkyle ayant 1 à 4 atomes